# EUROPEAN PATENT APPLICATION

(11) **EP 3 521 968 A1**
(43) Date of publication of application: **07.08.2019**
(21) Application number: 16917318.4
(22) Date of filing: 30.09.2016
(51) Int. Cl.: G06F 1/16

(54) **ELECTRONIC DEVICE**

(71) Applicant: Shenzhen Royole Technologies Co., Ltd., Shenzhen, Guangdong 518172 (CN)
(72) Inventor: ZHANG, Xuan, Shenzhen Guangdong 518052 (CN); LIAO, Le, Shenzhen Guangdong 518052 (CN)
(74) Representative: Romano, Giuseppe
(86) International application number: PCT/CN2016/101193
(87) International publication number: WO 2018/058568

(57) **Abstract**

Disclosed is an electronic device (100). The electronic device (100) comprises a flexible main body (10) and a wrist band (20). The flexible main body (10) comprises a flexible display screen (11), and two ends of the wrist band (20) are respectively connected to two ends of the flexible main body (10). When the flexible main body (10) is in a flat-panel state, the wrist band (20) adheres to a back side of the flexible main body (10) facing away from the flexible display screen (11); when the flexible main body (10) is in a flexed state, the wrist band (20) forms a ring-shaped structure with the flexible main body (10). In the electronic device (100), the two ends of the flexible main body (10) are connected via the wrist band (20), and when the flexible main body (10) is in a flexed state, the flexible main body (10) and the wrist band (20) can form a ring-shaped structure, such that the electronic device (100) can be worn on the wrist without falling off by adjusting a length of the wrist band (20). Accordingly, the electronic device (100) can be used in different scenarios without changing the size of the electronic device (100), thus improving user experience.

## Description

### FIELD

The present disclosure relates to a field of terminals, and more particularly to an electronic device.

### BACKGROUND

In the related art, the mobile phone may be designed to be bendable. The mobile phone is straight plane in normal use. When not in use, the mobile phone may be bent into a curved shape to be worn on the hand. However, in order to prevent the mobile phone from falling off when being worn, the mobile phone is usually manufactured to have a big length, and there are large black borders on both top and bottom ends of the mobile phone, thus affecting the user experience.

### SUMMARY

The present disclosure aims to solve at least one of the technical problems existing in the related art. To this end, the present disclosure provides an electronic device.

The electronic device according to embodiments of the present disclosure includes a flexible body and a wrist strap. The flexible body includes a flexible display screen, and two ends of the wrist strap connect to two ends of the flexible body respectively. When the flexible body is in a flat state, the wrist strap is attached to a back surface of the flexible body opposite to the flexible display screen. When the flexible body is in a curved state, the wrist strap and the flexible body together form an annular structure.

In the electronic device according to the embodiments of the present disclosure, the two ends of the flexible body are connected by the wrist strap, and when the flexible body is in the curved state, the flexible body and the wrist strap can form the annular structure, so that the electronic device can be worn and will not fall off by adjusting the length of the wrist strap. In this way, the electronic device can be adapted to different use environments without changing the size of the electronic device, thereby improving the user experience.

### BRIEF DESCRIPTION OF THE DRAWINGS

The above and/or additional aspects and advantages of the present disclosure will become apparent and more readily appreciated from descriptions of embodiments made with reference to the following drawings.
Fig. 1 is a plan view of an electronic device in a flat state according to an embodiment of the present disclosure.
Fig. 2 is a side view of an electronic device in a flat state according to an embodiment of the present disclosure.
Fig. 3 is a perspective view of an electronic device in a flat state according to an embodiment of the present disclosure.
Fig. 4 is another perspective view of an electronic device in a flat state according to an embodiment of the present disclosure.
Fig. 5 is a side view of an electronic device in a curved state according to an embodiment of the present disclosure.
Fig. 6 is a perspective view of an electronic device in a curved state according to an embodiment of the present disclosure.
Fig. 7 is a rear view of an electronic device according to an embodiment of the present disclosure.
Fig. 8 is a partially exploded view of an electronic device according to an embodiment of the present disclosure.
Fig. 9 is another partially exploded view of an electronic device according to an embodiment of the present disclosure.
Fig. 10 is yet another partially exploded view of an electronic device according to an embodiment of the present disclosure.
Fig. 11 is still another partially exploded view of an electronic device according to an embodiment of the present disclosure.
Fig. 12 is an enlarged view of portion I of the electronic device in Fig. 11.
Fig. 13 is a still further partially exploded view of an electronic device according to an embodiment of the present disclosure.

### DETAILED DESCRIPTION

Embodiments of the present disclosure will be described in detail and examples of embodiments are illustrated in the drawings. The same or similar elements and the elements having the same or similar functions are denoted by like reference numerals throughout the descriptions. Embodiments described herein with reference to drawings are explanatory, serve to explain the present disclosure, and are not construed to limit embodiments of the present disclosure.

In the description of the specification, it should be understood that the orientation or positional relationship indicated by the terms such as "central", "longitudinal", "transverse", "length", "width", "thickness", "upper", "lower", "front", "rear", "left", "right", "vertical", "horizontal", "top", "bottom", "inner", "outer", "clockwise" and "counterclockwise" and the like is based on the orientation or positional relationship shown in the drawings, only for convenience of description of the present disclosure and simplification, and is not intended to indicate or imply that the device or component referred to has a particular orientation, is constructed and operated in a particular orientation, and thus is not to be understood as limiting the present disclosure. In addition, terms such as "first" and "second" are used herein for purposes of description and are not intended to indicate or imply relative importance or significance or to imply the number of indicated technical features. Thus, the feature defined with "first" and "second" may comprise one or more of this features either explicitly or implicitly. In the description of the present disclosure, "a plurality of" means two or more than two, unless specified otherwise.

In the description of the present disclosure, unless specified or limited otherwise, the terms "mounted", "connected", "coupled" and the like are used broadly, and may be, for example, fixed connections, detachable connections, or integral connections; may also be mechanical or electrical connections; may also be direct connections or indirect connections via intervening structures; may also be inner communications of two elements or interaction relationships of two elements. Specific meanings of the above terms in the present disclosure can be understood by those skilled in the art according to specific situations.

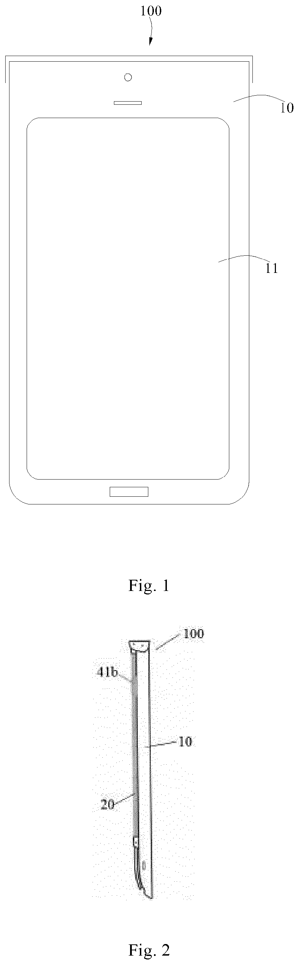

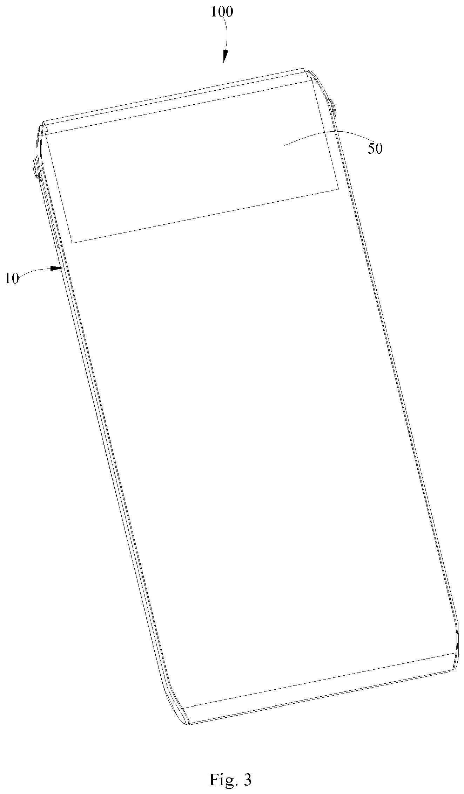

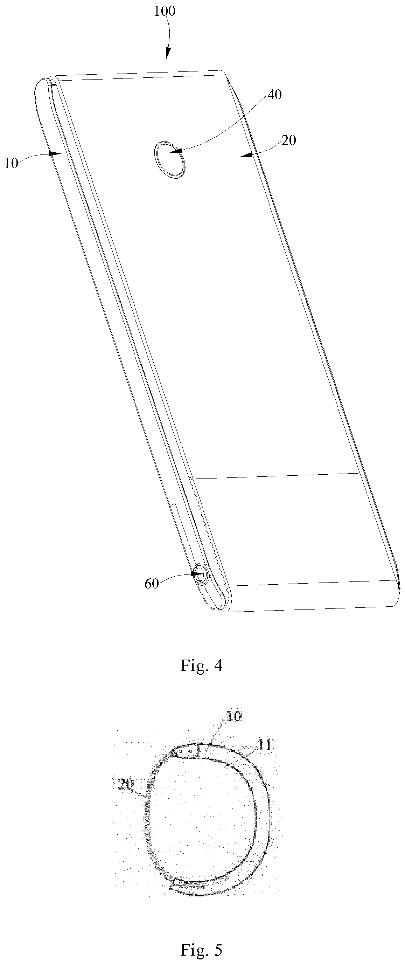

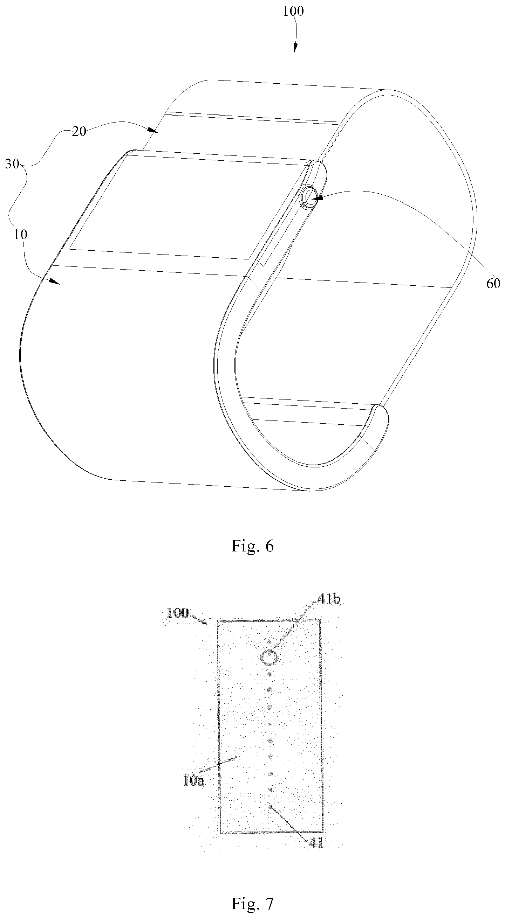

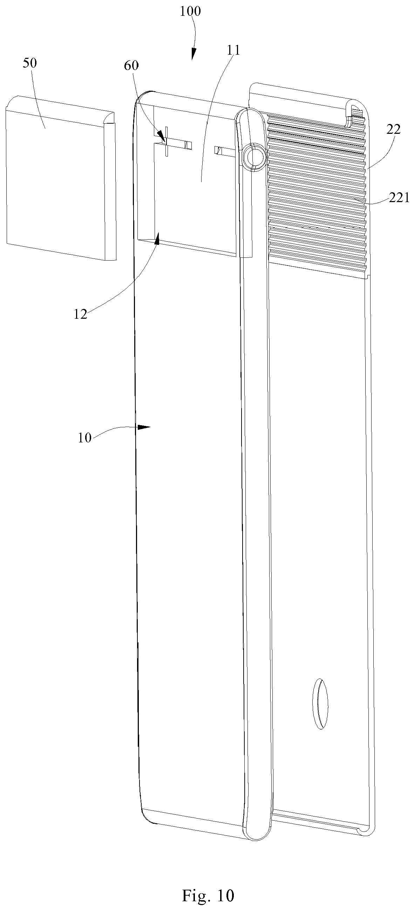

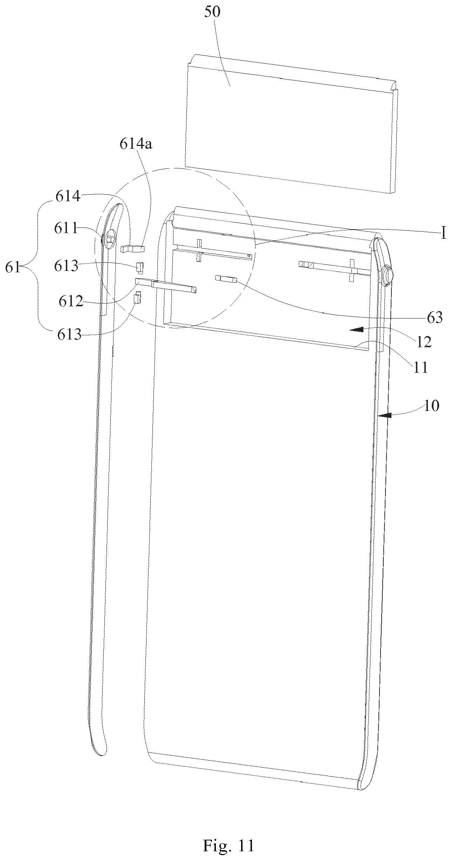

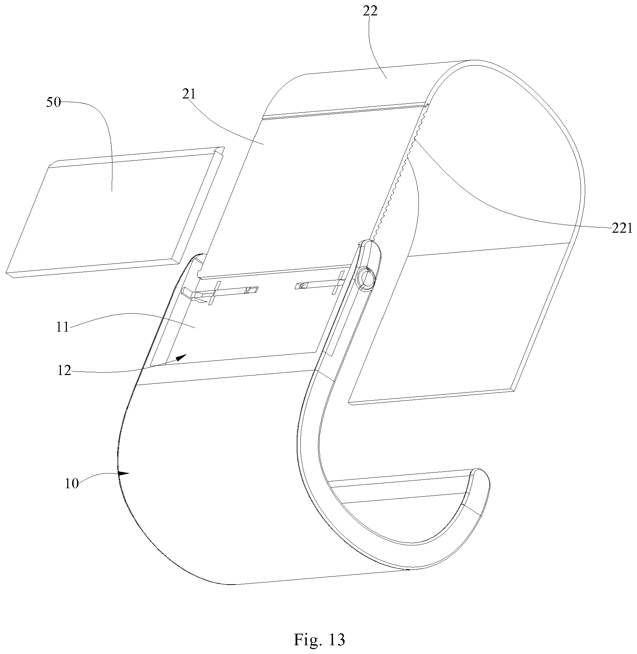

Referring to Figs. 1 to 13 together, an electronic device 100 according to embodiments of the present disclosure includes a flexible body 10 and a wrist strap 20. The flexible body 10 includes a flexible display screen 11. Two ends of the wrist strap 20 respectively connect to two ends of the flexible body 10. When the flexible body 10 is in a flat state, the wrist strap 20 attaches to a back surface 10a of the flexible body 10. The back surface 10a is opposite to the flexible display screen 11. When the flexible body 10 is in a curved state, the wrist strap 20 and the flexible body 10 together form an annular structure 30 (refer to Figs. 5 and 6).

In the electronic device 100 according to the embodiments of the present disclosure, the two ends of the flexible body 10 are connected by the wrist strap 20, and when the flexible body 10 is in the curved state, the flexible body 10 and the wrist strap 20 can together form the annular structure 30, such that the electronic device 100 can be worn on the hand and will not fall off by adjusting the length of the wrist strap 20. In this case, the electronic device 100 can apply to different use environments without changing the size of the electronic device 100, thereby improving the user experience.

In the embodiment of the present disclosure, in a normal use state, the electronic device 100 is in a plane shape. In a wearing state, the electronic device 100 provides the annular structure 30.

In the embodiment of the present disclosure, the electronic device 100 can be used as a wearable device. Thus, the electronic device 100 serving as the wearable device has a plurality of configuration states (such as the flat state and the curved state), thereby realizing multiple use functions and wide application.

In some examples, the electronic device 100 is a mobile phone. Thus, when the flexible body 10 is in the flat state, the electronic device 100 can be used as a universal mobile phone. In this case, the wrist strap 20 attached to the back surface 10a provides a protection function for the flexible body 10 to some extent. When the flexible body 10 is in the curved state, the electronic device 100 can be stably worn through the annular structure 30 formed by the wrist strap 20 and the flexible body 10. In this case, the electronic device 100 can realize the detection of related information.

In an embodiment, the electronic device 100 includes a sensor (not shown in the drawing), such as a pressure sensor. The electronic device 100 can detect and collect health data related to user through the sensor, such as heart rate or blood pressure, and also can display corresponding test results through the flexible display screen 11, so as to prompt the user.

It should be noted that the specific manner of implementing the detection of the related information by the electronic device 100 is not described in detail herein, and the related art can be referred to for details. Moreover, other manners of implementing human-computer interaction by the wearable device may also be applied to the electronic device 100 according to the embodiment of the present disclosure.

In this way, the electronic device 100 has the functions of the universal mobile phone, and also can be stably worn instead of falling off without increasing its length, thereby avoiding the fact that there are large black borders on both top and bottom ends of the mobile phone due to a large length of the mobile phone.

In the embodiments of the present disclosure, the flexible body 10 may be made of a flexible material. The flexible material may include a silica gel. In other embodiments, the flexible body 10 may also include a plurality of rigid bodies and hinge structures connecting the plurality of rigid bodies. Or, the flexible body 10 may also be constructed by the hinge structures completely. Thus, the flexible body 10 can be curved, and has good flexibility and bending resistance.

In the embodiment of the present disclosure, the flexible display screen 11 is an organic-light-emitting-diode (OLED) display screen. The flexible display screen 11 includes a flexible touch screen (not shown in the drawing) disposing on a surface of the flexible display screen 11. The flexible touch screen may use an indium tin oxide layer, a carbon nanotube layer or a graphene layer as a transparent conductive layer. Thus, the flexible display screen 11 has good mechanical property and bending resistance.

In the embodiment of the present disclosure, the annular structure 30 is a closed structure. When the flexible body 10 is in the flat state, the wrist strap 20 is attached to the back surface 10a of the flexible body 10, and when the flexible body 10 is in the curved state, the wrist strap 20 can be detached from the back surface 10a by an external force and further configured into the closed annular structure 30 together with the flexible body 10 (as shown in Figs. 5 and 6). In this case, the flexible display screen 11 is located at an outer side of the annular structure 30. Thus, when the flexible body 10 is in the curved state, the wrist strap 20 and the flexible body 10 constitute the closed annular structure. The closed annular structure has good structural stability, thereby fully ensuring that the electronic device 100 can be worn and will not fall off.

In some examples, the wrist strap 20 may be made of leather, flannelette or metal band, or stretchable material.

In an embodiment, the two ends of the wrist strap 20 detachably connect to the two ends of the flexible body 10, respectively.

In this way, the detachable connection makes it easy to replace and repair the wrist strap 20.

In an embodiment, the electronic device 100 includes a fixing mechanism 40. As shown in Fig. 4, the fixing mechanism 40 fixes the wrist strap 20 in a position where the wrist strap 20 is attached to the back surface 10a.

Thus, the fixing mechanism 40 improves the stability of attachment of the wrist strap 20 to the back surface 10a, and thus the wrist strap 20 is not easy to detach by the external force. Also, the fixing mechanism 40 can be configured reasonably to realize the detachable connection of the flexible body 10 and the wrist strap 20, thereby improving the use flexibility of the wrist strap 20.

In an embodiment, the fixing mechanism 40 includes a first magnetic element 41 (see Fig. 7) arranged on the back surface 10a and a second magnetic element (not shown in the drawings) arranged on the wrist strap 20. The first magnetic element 41 and the second magnetic element attract each other.

In this way, a mutual attraction of the two magnetic elements ensure the stability of attachment of the wrist strap 20 to the back surface 10a, and also allow a high precision of attachment of the wrist strap 20 to the back surface 10a, thereby ensuring the accuracy of the electronic device 100 when the electronic device 100 is used as the wearable device. Also, a space required for the magnetic element is relatively small, which is beneficial to the lightweight and integrated design of the electronic device 100, and the arrangement manner of the magnetic element is relatively simple and easy to implement. In the illustrated example, a plurality of the first magnetic elements 41 are provided, and the number of the second magnetic elements is the same with that of the first magnetic elements 41, thereby improving the degree of an attachment of the wrist strap 20 to the back surface 10a, and ensuring the convenience of using the electronic device 100 in the flat state.

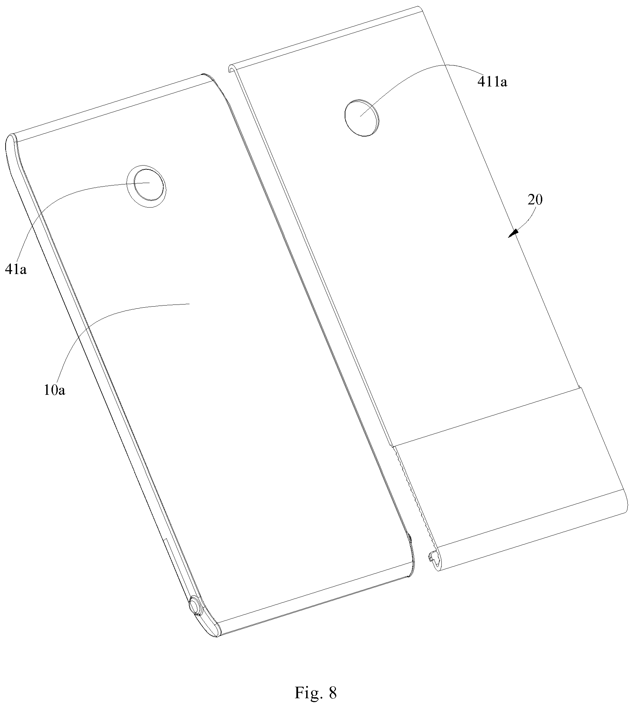

Referring to Fig. 8, in an embodiment, the fixing mechanism 40 includes a protruding member 41a arranging on the back surface 10a and a first through hole 411a defining in the wrist strap 20, and the protruding member 41a is configured to coordinately couple to the first through hole 411a.

In this way, the fixing mechanism 40 allows the wrist strap 20 to fixedly attach to the back surface 10a in a relatively simple manner with the protruding member 41a being received in the first through hole 411a. This fixing manner is not only simple but also need a small configuration space, thus providing a high applicability.

It should be noted that sizes and arrangement positions of the protruding member 41a and the first through hole 411a can be set according to specific circumstances.

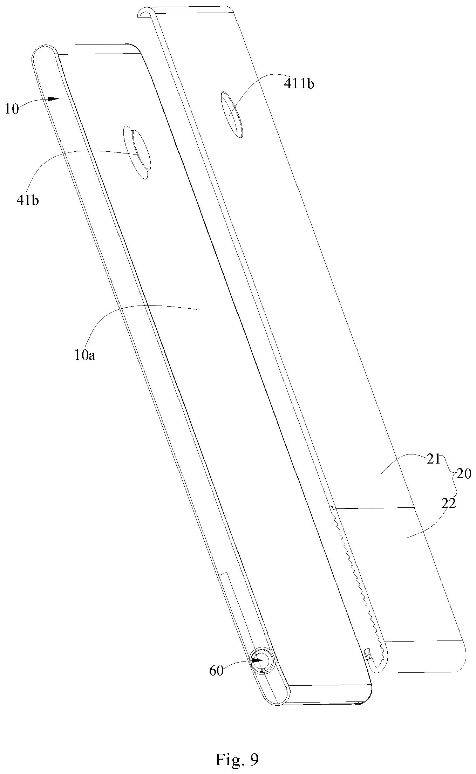

Referring to Fig. 9, in an embodiment, the electronic device 100 includes a camera 41b protruding from the back surface 10a. The fixing mechanism 40 includes the camera 41b and a second through hole 411b formed in the wrist strap 10, and the camera 41b is configured to fit in the second through hole 411b.

In this way, the arrangement of the camera 41b can fasten the wrist strap 20 on one hand, and can add function to the electronic device 100 on the other hand, thereby improving the user experience.

In an embodiment, the wrist strap 20 is an integrated structure. Thus, the structure is simple, easy to process, and down manufacturing cost.

In an embodiment, the wrist strap 20 has a same width as the flexible body 10.

Thus, when the flexible body 10 is in the flat state, the wrist strap 20 covers a side of the flexible body 10, so that the flexible body 10 can be better protected. When the flexible body 10 is in the curved state, the annular structure 30 formed by the wrist strap 20 and the flexible body 10 has a uniform width and a large bearing surface, thus ensuring the wearing comfort.

In an embodiment, a length of a part of the wrist strap 20, that forms the annular structure 30 together with the flexible body 10, is adjustable.

In this way, the electronic device 100 can be adapted to different use environments by adjusting the length of the wrist strap 20, thereby improving the versatility of the electronic device 100.

In an embodiment, the wrist strap 20 includes a connection segment 21 and an adjustment segment 22. A first end of the connection segment 21 connects to one end of the flexible body 10, and a second end of the connection segment 21 connects to the adjustment segment 22. The adjustment segment 22 is partially accommodated in the other end of the flexible body 10, and a length of a part of the adjustment segment 22 extending out of the flexible body 10 is adjustable.

Thus, when the flexible body 10 is in the curved state, the electronic device 100 can be adapted to different use environments by adjusting the length of the part of the adjustment segment 22 extending out of the flexible body 10. Moreover, the wrist strap 20 is adjustable at one end and fixed at the other end, which is convenient for adjustment and is easy for arrangement.

It should be noted that a ratio of a length of the connection segment 21 to a length of the adjustment segment 22 may be set according to the specific situation.

In an embodiment, the electronic device 100 includes a cover plate 50. The other end of the flexible body 10 is provided with a groove 11 therein. The cover plate 50 coordinately couples to the groove 11 to form an accommodating cavity 12. When the electronic device 100 is in the flat state, a part of the adjustment segment 22 has a curved shape and is partially received in the accommodating cavity 12.

Thus, the configuration of the accommodating cavity 12 augments the configurable space of the electronic device 100. For example, other functional components of the electronic device 100 can be placed in the accommodating cavity 12. Additionally, since the part of the adjustment segment 22 received in the flexible body 10 is in the curved shape, when the flexible body 10 is in the curved state, the part of the adjustment segment 22 received in the flexible body 10 and the other part of the adjustment segment 22 extending out of the flexible body 10 have the same structural state, thereby facilitating adjustment of the length of the wrist strap 20.

Specifically, in the embodiment of the present disclosure, the connection segment 21 fixedly connects to the adjustment segment 22. When the flexible body 10 is in the flat state, a part of the adjustment segment 22 is curved and received in the accommodating cavity 12. When the flexible body 10 is in the curved state, the part of the adjustment segment 22 extending out of the flexible body 10 can be pressed into or pulled out of the accommodating cavity 12 to adjust the length of the part of the adjustment segment 22 extending out of the flexible body 10, thereby achieving stable and comfortable wearing.

In an embodiment, the connection segment 21 is a flexible stretchable band.

In this way, the connection segment 21 has stretchability, so that after adjusting the part of the adjustment segment 22 extending out of the flexible body 10 to a suitable length, the stretchability of the connection segment 21 allows the electronic device 100 to be worn tightly and can improve the wearing comfort.

In an example, the connection segment 21 and the adjustment segment 22 are integrated, and the connection segment 21 and the adjustment segment 22 are both made of a flexible material. Thus, the connection segment 21 and the adjustment segment 22 both have stretchability.

In an embodiment, the electronic device 100 includes an adjustment mechanism 60. The adjustment mechanism 60 is configured to adjust the length of the part of the adjustment segment 22 that extends out of the flexible body 10.

In this way, the adjustment mechanism 60 allows the length of the part of the adjustment segment 22 of the wrist strap 20 extending out of the flexible body 10 to be controllable, thereby improving the convenience and operability of the wrist strap 20.

In an embodiment, the adjustment segment 22 is provided with a plurality of snapping grooves 221 on a side thereof, and the plurality of snapping grooves 221 are arranged in sequence along a length direction of the adjustment segment 22. The adjustment mechanism 60 includes a driving part 61 and a snapping part 62. The snapping part 62 is configured to abut against one of the plurality of snapping grooves 221, and the adjusting mechanism 60 drives the snapping part 62 by the driving part 61 to break away from abutting against the snapping groove 221, so as to adjust the length of the part of the adjustment segment 22 extending out of the flexible body 10.

In an embodiment, when the snapping part 62 abuts against a corresponding snapping groove 221, the part of the adjustment segment 22 extending out of the flexible body 10 is in an unadjustable state, that is, the length of the adjustment segment 22 is fixed. In this case, the snapping part 62 plays the role of fixing positions. When the length of the part of the adjustment segment 22 extending out of the flexible body 10 needs to be adjusted, it only requires for the driving part 61 to drive the snapping part 62 to break away from abutting against the corresponding snapping groove 221, so that the adjustment segment 22 is in an adjustable state. The size of the annular structure 30 can be adjusted by pulling out the part of the adjustment segment 22 received in the accommodating cavity 12 or by inserting the part of the adjustment segment 22 extending out of the flexible body 10 into the accommodating cavity 12. After the adjustment, the snapping part 62 can abut against the snapping grooves 211 at different positions, and thus, the part of the adjustment segment 22 extending out of the flexible body 10 can be fixed again.

In this way, the adjustment mechanism 60 can achieve the adjustment of the length of the part of the adjustment segment 22 extending out of the flexible body 10 in a relatively simple and stable manner by the cooperation of the driving part 61 and the snapping part 62. Moreover, the switchable adjustment mode in which the snapping part 62 abuts against the snapping groove 221 is simple and straightforward, and has high operability. Further, the number of the snapping grooves 221 can be changed, thus making the adjustment flexible.

In an embodiment, the driving part 61 includes a button 611, a driving rod 612 and a driving shaft 613. The button 611 disposes on a side of the flexible body 10 and connects to the driving rod 612, and the driving shaft 613 rotatably disposes on the driving rod 612 and passes through the driving rod 612. The driving part 61 drives the driving rod 612 by the button 611 to rotate around the driving shaft 613 so as to drive the snapping part 62 to break away from abutting against the snapping groove 221.

In this way, the adjustment mechanism 60 implements the adjustment of the adjustment segment 22 in a relatively simple mechanical transmission manner. Further, by the coordinate rotation of the driving rod 612 and the driving shaft 613, the snapping part 62 is switched to abut against the snapping grooves 221 at different positions. This adjustment mode makes the driving of the adjustment mechanism 60 accurate and efficient, and can avoid abrasion due to an excessive friction between the snapping part 62 and the snapping groove 221 to some extent.

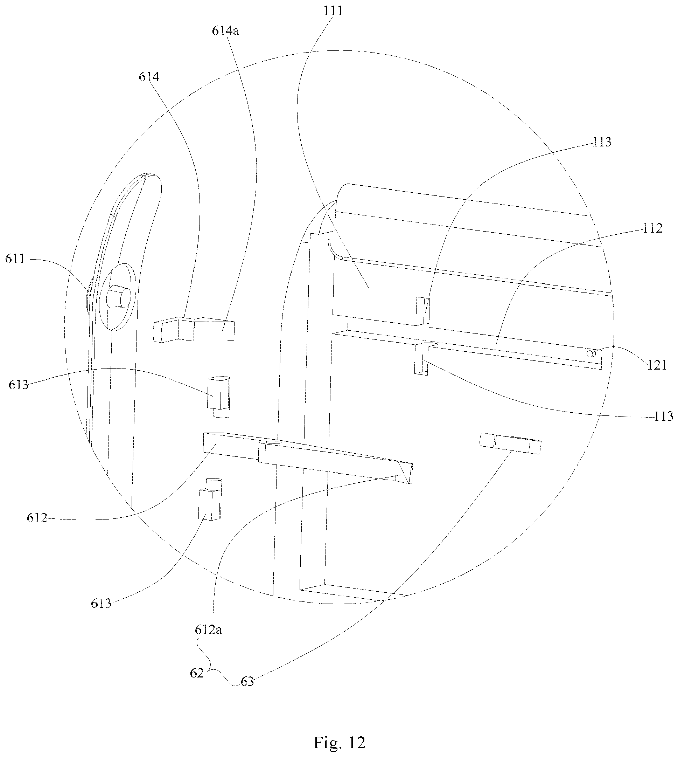

In an embodiment, referring to Fig. 12, a bottom surface 111 of the groove 11 is provided with a first engaging groove 112 and two second engaging grooves 113. The first engaging groove 112 communicates the two second engaging grooves 113, and the two second engaging grooves 113 are respectively communicated to opposite sides of the first engaging groove 112. The driving part 61 includes one driving rod 612 and two driving shafts 613, the driving rod 612 is mounted in the first engaging groove 112. The two driving shafts 613 rotatably dispose to the driving rod 612 and pass through the driving rod 612, and then dispose in the two second engaging grooves 113, correspondingly.

In this way, the stability of the rotation fit of the driving rod 612 and the driving shafts 613 is ensured.

In an embodiment, the driving rod 612 and the driving shaft 613 are both received in the accommodating cavity 12. When the flexible body 10 is in the curved state, the snapping part 62 can abut against the corresponding snapping groove 211 to fix the size of the annular structure 30. In this case, the adjustment mechanism 60 can be used to adjust the length of the part of the adjustment segment 22 extending out of the flexible body 10, so as to change the size of the annular structure 30. Specific adjustment steps are shown as follows.

When the adjustment segment 22 is to be adjusted, the button 611 is pressed, and the button 611 will drive the driving rod 612 to rotate around the driving shafts 613. An end of the driving rod 612 close to the button 611 is tilted up (e.g., in a direction approaching the cover plate 50), and another end of the driving rod 612 close to the snapping part 62 moves downwards (e.g., in a direction running away from the cover plate 50), thereby driving the snapping part 62 to break away from abutting against the snapping groove 211.

In this case, the size of the annular structure 30 can be adjusted by pulling out the part of the adjustment segment 22 received in the accommodating cavity 12 or by inserting the part of the adjustment segment 22 extending out of the flexible body 10 into the accommodating cavity 12. When the button 611 is released and returns to the original state, the driving rod 612 can be rotated around the driving shaft 613, the end of the driving rod 612 close to the button 611 is withdrawn downwards (e.g., in the direction running away from the cover plate 50), and the end of the driving rod 612 close to the snapping part 62 is moved upwards (e.g., in the direction approaching the cover plate 50), until the snapping part 62 is driven to abut against another corresponding snapping groove 211. In this case, the length adjustment of the adjustment segment 22 is finished.

In an embodiment, the driving part 61 includes a driving mating member 614. The driving mating member 614 connects the button 611 and the driving rod 612. The driving mating member 614 is provided with an inclined surface 614a on an end thereof, and the inclined surface 614a is configured to coordinate with the driving rod 612.

In this way, the force between the button 611 and the driving rod 612 can be buffered by the driving mating member 614, and also, the end of the driving mating member 614 has the inclined surface 614 for coordination, so that the driving mating member 614 has a large bearing surface, and the stability of the adjustment mechanism 60 can be improved.

Specifically, when the button 611 is pressed, the button 611 drives the driving mating member 614 to move towards the driving rod 612. During the movement of the driving mating member 614, the inclined surface 614a raises the end of the driving rod 612 close to the button 611, so that the end of the driving rod 612 close to the button 611 is tilted up.

In an embodiment, the adjustment mechanism 60 includes an elastic piece 63. The driving rod 612 is provided with a protrusion 612a on an end thereof. The elastic piece 63 abuts against the driving rod 612 to enable the protrusion 612a to abut against the snapping groove 221. The elastic piece 63 and the protrusion 612a constitute the snapping part 62.

Thus, the elastic piece 63 and the protrusion 612a together form the snapping part 62, such that the snapping part 62 elastically abuts against the snapping groove 221, which improves the flexibility of the snapping part 62 abutting against the snapping groove 221, and facilitates the successive switching of the snapping part 62 to abut against the multiple snapping grooves 221. Moreover, this configuration simplifies the structure of the adjustment mechanism 60.

In the embodiment of the present disclosure, when the snapping part 62 abuts against the corresponding snapping groove 211, one end of the protrusion 612a is rested on the elastic piece 63, and the other end of the protrusion 612a abuts against the snapping groove 211. In this case, the length of the adjustment segment 22 is fixed. When the snapping part 62 breaks away from abutting against the snapping groove 211, the driving rod 612 drives the protrusion 612a to compress the elastic piece 63 and to be accommodated in the first engaging groove 112, so as to disengage from the corresponding snapping groove 211. In this case, the length of the adjustment segment 22 is adjustable. When the part of the adjustment segment 22 is adjusted to the proper length, the button 611 is released, and the compressed elastic piece 63 may drive the protrusion 612a to return to the original position so as to abut against another snapping groove 211. Thus, the adjustment is finished. The use of the elastic piece 63 makes the adjustment flexible.

In an embodiment, the elastic piece 63 is a U-shaped elastic piece. Thus, the elastic piece 63 has a large bearing surface.

In an embodiment, an elastic-piece fixing member 121 is provided in the first engaging groove 112. A surface of the elastic piece 63 facing the first engaging groove 112 defines a fixing hole. The elastic-piece fixing member 121 passes through the fixing hole, so that the elastic piece 63 is fixed in the engaging groove 112 and abuts against the driving rod 612.

Thus, the position of the elastic piece 63 is fixed, so that the snapping part 62 can stably abut against the plurality of snapping grooves 221, thus improving the stability of the adjustment mechanism 60.

In the embodiment of the present disclosure, the adjustment mechanism 60 includes two elastic pieces 63, and the driving part 61 includes two buttons 611, two driving rods 612, four driving shafts 613 and two driving mating members 614. The two buttons 611 symmetrically dispose to both sides of the flexible body 10, respectively. One elastic piece 63, one button 611, one driving rod 612, two driving shafts 613 and one driving mating member 614 of the adjustment mechanism 60 constitute an adjustment system, i.e. the adjustment mechanism 60 includes two adjustment systems. The two adjustment systems enhance the stability of the adjustment.

In an example, the two adjustment systems of the adjustment mechanism 60 are located in the same horizontal position. When the adjustment mechanism 60 is used to adjust the adjustment segment 22, the two adjustment systems must be used simultaneously to effectively adjust the adjustment segment 22. Specifically, during the adjustment, the length of the part of the adjustment segment 22 extending out of the flexible segment 10 can be effectively adjusted only by simultaneously pressing the two buttons 611 on both sides, thus ensuring the adjustment balance of the adjustment mechanism 60.

In the description of the present disclosure, a structure in which a first feature is "on" or "below" a second feature may include an embodiment in which the first feature directly contacts the second feature, and may also include an embodiment in which an additional feature is formed between the first feature and the second feature so that the first feature does not directly contact the second feature, unless specified otherwise. Furthermore, a first feature "on," "above," or "on top of' a second feature may include an embodiment in which the first feature is right "on," "above," or "on top of" the second feature, and may also include an embodiment in which the first feature is not right "on," "above," or "on top of' the second feature, or just means that the first feature is at a height higher than that of the second feature. While a first feature "beneath," "below," or "on bottom of' a second feature may include an embodiment in which the first feature is right "beneath," "below," or "on bottom of' the second feature, and may also include an embodiment in which the first feature is not right "beneath," "below," or "on bottom of" the second feature, or just means that the first feature is at a height lower than that of the second feature.

Various embodiments and examples are provided in the description to implement different structures of the present disclosure. In order to simplify the present disclosure, certain elements and settings will be described. However, these elements and settings are only by way of example and are not intended to limit the present disclosure. In addition, reference numerals and/or reference letters may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied.

Reference throughout this specification to "an embodiment", "some embodiments", "one embodiment", "another example", "an example", "a specific example" or "some examples" means that a particular feature, structure, material, or characteristic described in connection with the embodiment or example is included in at least one embodiment or example of the present disclosure. Thus, the appearances of the phrases such as "in some embodiments", "in one embodiment", "in an embodiment", "in another example", "in an example", "in a specific example" or "in some examples" in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. An electronic device, comprising a flexible body and a wrist strap, the flexible body comprising a flexible display screen, two ends of the wrist strap connecting to two ends of the flexible body respectively, wherein when the flexible body is in a flat state, the wrist strap attaches to a back surface of the flexible body opposite to the flexible display screen; when the flexible body is in a curved state, the wrist strap and the flexible body together form an annular structure.

2. The electronic device according to claim 1, comprising a fixing mechanism, and the fixing mechanism fastening the wrist strap in a position where the wrist strap attaches to the back surface.

3. The electronic device according to claim 2, wherein the fixing mechanism comprises a first magnetic element disposing on the back surface and a second magnetic element disposing on the wrist strap, the first magnetic element and the second magnetic element attract mutually.

4. The electronic device according to claim 2, wherein the fixing mechanism comprises a protruding member arranged on the back surface and a through hole defined in the wrist strap, and the protruding member fits in the through hole.

5. The electronic device according to claim 2, comprising a camera protruding from the back surface, the fixing mechanism comprising the camera and a through hole defined in the wrist strap, and the camera fitting in the through hole.

6. The electronic device according to claim 1, wherein the wrist strap has a same width as the flexible body.

7. The electronic device according to claim 1, wherein a length of a part of the wrist strap forming the annular structure together with the flexible body is adjustable.

8. The electronic device according to claim 7, wherein the wrist strap comprises a connection segment and an adjustment segment, the connection segment comprising a first end connecting with one end of the flexible body, and a second end connecting with the adjustment segment, the adjustment segment is partially received in the other end of the flexible body, and a length of a part of the adjustment segment extending out of the flexible body is adjustable.

9. The electronic device according to claim 8, comprising a cover plate, the other end of the flexible body defining a groove therein, and the cover plate coordinately coupling to the groove to define an accommodating cavity, wherein when the electronic device is in the flat state, a part of the adjustment segment is in a curved shape and is partially received in the accommodating cavity.

10. The electronic device according to claim 8, wherein the connection segment is a flexible stretchable band.

11. The electronic device according to claim 8, comprising an adjustment mechanism, the adjustment mechanism being configured to adjust the length of the part of the adjustment segment extending out of the flexible body.

12. The electronic device according to claim 11, wherein the adjustment segment defines a plurality of snapping grooves in a side thereof, and the plurality of snapping grooves are arranged in sequence along a length direction of the adjustment segment,
the adjustment mechanism comprises a driving part and a snapping part, the snapping part abuts against one of the plurality of snapping grooves, and the adjustment mechanism adjusts the length of the part of the adjustment segment extending out of the flexible body by the driving part driving the snapping part to break away from abutting against the snapping groove.

13. The electronic device according to claim 12, wherein the driving part comprises a button, a driving rod and a driving shaft, the button disposes on a side of the flexible body and connects to the driving rod, and the driving shaft rotatably disposes to the driving rod and passes through the driving rod,
the driving part is configured to drive the driving rod by the button to rotate around the driving shaft so as to drive the snapping part to break away from abutting against the snapping groove.

14. The electronic device according to claim 13, wherein the driving part comprises a driving mating member, the driving mating member connects with the button and the driving rod, the driving mating member has an inclined surface on an end thereof, and the inclined surface is configured to coordinate with the driving rod.

15. The electronic device according to claim 13, wherein the adjustment mechanism comprises an elastic piece, the driving rod has a protrusion on an end thereof, the elastic piece is configured to abut against the driving rod to allow the protrusion to abut against the snapping groove, the elastic piece and the protrusion form the snapping part.
